(19) **Europäisches Patentamt**
**European Patent Office**
**Office européen des brevets**

(11) **EP 4 098 971 A1**

(12) **EUROPEAN PATENT APPLICATION**

(43) Date of publication:
**07.12.2022 Bulletin 2022/49**

(21) Application number: **21176958.3**

(22) Date of filing: **31.05.2021**

(51) International Patent Classification (IPC):
***G01B 11/24*** *(2006.01)*

(52) Cooperative Patent Classification (CPC):
**G01B 11/24**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **OptiNav Sp. z o.o.**
**76-200 Slupsk (PL)**

(72) Inventors:
- **Skwarek, Pawel**
  **76200 Slupsk (PL)**
- **Smigielski, Arkadiusz**
  **76-251 Kobylnica (PL)**

(74) Representative: **Brunotte, Joachim Wilhelm Eberhard**
**Patentanwälte Bressel und Partner mbB**
**Potsdamer Platz 10**
**10785 Berlin (DE)**

(54) **DETERMINING A THREE-DIMENSIONAL GEOMETRY OF A WORKPIECE**

(57) The invention relates to a method of determining a three-dimensional geometry of a workpiece (10), which comprises a workpiece surface that is coated by a coating (14), comprising the steps:
- capturing (3) a marker pattern (22) of the coating (14) by an optical coordinate measuring device (1),
- determining (7) coordinates of a plurality of points of the marker pattern (22) with respect to three dimensions, thereby determining the geometry of the workpiece (10).

Fig. 3

EP 4 098 971 A1

Processed by Luminess, 75001 PARIS (FR)

**Description**

The present invention relates to a method of determining a three-dimensional geometry of a workpiece. Furthermore, the present invention relates to an arrangement for determining a three-dimensional geometry of a workpiece.

When mounting different workpieces together, deviations from desired workpiece dimensions may result in intolerable mechanical tensions and gaps. Most of the specimens obtained by series production of workpieces may match the dimensional requirements, but it may happen occasionally that individual specimens do not sufficiently fit to each other. This is especially true for sheet material, such as window panes and body panels of vehicles. In particular in case of workpieces having a curved surface, determining the three-dimensional geometry for all or a large fraction of the series production may require too much resources and time if the workpieces are measured by standard coordinate measuring devices. The present invention in particular relates to determining the three-dimensional geometry of workpieces of the kind mentioned before.

It is an object of the present invention to provide a method of determining a three-dimensional geometry of a workpiece that can be performed with little effort. It is a further object of the present invention to provide a corresponding arrangement.

It is proposed to capture a marker pattern of a coating on the workpiece surface by an optical coordinate measuring device and to determine, based on the result of the capturing, coordinates of a plurality of points (i.e. at least two points) of the marker pattern with respect to three dimensions, thereby determining the geometry of the workpiece. A corresponding arrangement comprises an optical coordinate measuring device and a determining device for determining the geometry of the workpiece. The optical coordinate measuring device is designed to capture a marker pattern of a coating on a surface of the workpiece and the determining device is designed to determine coordinates of a plurality of points of the marker pattern with respect to three dimensions from capturing results of the optical coordinate measuring device. By determining the coordinates, the geometry of the workpiece is determined.

A marker pattern can be captured by an optical coordinate measuring device with little effort compared to capturing the workpiece surface without an additional marker pattern.

Capturing the marker pattern may result in a lower spatial resolution (because only a single point or a few points of each marker may be determined) compared to directly capturing surface points of the workpiece, but this may be acceptable especially when all or a large fraction of the workpieces produced in series production shall be checked for compatibility with other workpieces to be fitted with.

Attaching a marker pattern directly to the workpiece surface may not be desired and may require an additional step of removing the marker pattern after capturing it with the optical coordinate measuring device. However, since the coating of the workpiece surface comprises the marker pattern, the coating can be removed, thereby removing the marker pattern. In particular if the workpiece is temporarily coated for other reasons, for example for protecting the workpiece surface and/or for applying and/or protecting a substance that interacts with the workpiece material, using the coating for the marker pattern does not require an additional step.

Therefore, the method may comprise applying the marker pattern to the coating prior to the step of capturing the marker pattern and/or removing the coating from the workpiece surface after the step of capturing the marker pattern. A preferred method of applying the marker pattern is to print the marker pattern onto the coating material, preferably before the coating is applied to the workpiece surface. Ink-jet printing is an example of a print method that enables high geometrical resolution of the print results.

In particular, as mentioned above, the coating may be a removable protective coating for protecting the workpiece surface. In this case, no additional step of applying the coating to the workpiece surface is required compared to the known handling of the workpiece.

In particular, the coating may be a plastic film, e.g. a polymer plastic film. This type of coatings can be produced at low costs and may adhere to the workpiece surface without an additional glue. However, other types of coatings may be used, such as a metal coating or a coating comprising metal and plastic, for example in a single layer and/or in separate layers.

In particular in the case that the coating comprises a plastic layer, or a layer with plastic, the coating can be applied to the workpiece surface by shrinking the coating material. One option of causing the shrinking process is to apply heat to the coating material. Shrinking plastic onto surfaces of workpieces is for example known in the field of packaging and shipping goods.

The term "three-dimensional geometry of a workpiece" means a geometry with respect to three linearly independent dimensions. However, it is not necessary, although possible, to determine the coordinates of the plurality of points of the marker pattern with respect to a three-dimensional coordinate system defined by three axes that extend pairwise orthogonal to each other, i.e. a Cartesian coordinate system. Instead, other coordinate systems may be used, such as a system with cylindrical or spherical coordinates.

The optical coordinate measuring device may comprise at least one digital camera, e.g. a camera with a two-dimensional sensor. Alternatively, any other optical coordinate measuring device that is capable of determining coordinates of a plurality of points of the marker pattern with respect to three dimensions can be used, such as a laser scanner.

In particular, pre-known information about the marker pattern may be used in the step of determining the coordinates of the marker pattern. The determining device may be designed to use the pre-known information. For example, the pre-known information may comprise information about the shape, size and/or structure of at least one marker and preferably of all markers of the marker pattern. In addition or alternatively, the pre-known information may comprise information about the relative or absolute position of different points of the marker pattern. For example, these points may be unique points of the markers of the marker pattern, e.g. center points of circular markers. Here, "absolute position" means the position in a known coordinate system, which may be, for example, a coordinate system defined with respect to the marker pattern or coordinate systems defined with respect to each specific marker of the pattern. An example of "relative position" is the distance of the respective points. However, it is possible that the information about the relative position also comprises directional information, i.e. information in which direction from a certain point a certain other point is located.

The pre-known information on the marker pattern may include the information about a feature of each of the markers that allows for unambiguously identifying the marker. In this case, the step of determining coordinates of a plurality of points of the marker pattern preferably includes identifying a plurality of the markers using the information about the respective marker feature. In particular, at least an attempt may be made to identify all markers captured by the optical coordinate measuring device, although the identification might fail for incomplete markers at the edge.

Using pre-known information about the marker pattern has the advantage that the determination of the marker pattern point coordinates can be faster, easier and/or more precise.

In the following, an embodiment is described that relates to determining the three-dimensional geometry of the workpiece edge. In particular in case of sheet material, the geometry of the edges must fulfil geometrical specifications if the workpiece shall fit to other workpieces. For example, in case of window panes for automobiles, especially windscreens, the geometry of the edge must fit to the carbody of the automobile. Otherwise, the window pane can be subject to high mechanical tensions or may not fit tightly to the carbody.

Not only with respect to this embodiment, it is proposed that the marker pattern comprises a plurality of markers of predefined shape and size. At least one of the markers may extend along an edge of a surface area of the workpiece surface on the coating, so that the at least one of the markers is incomplete compared to the predefined shape on the coating at the surface area. Thereby, the marker comprises an incomplete marker part on the coating at the surface area. Consequently, there is a missing marker part which is not on the coating at the surface area. The incomplete marker part is captured by the optical coordinate measuring device and coordinates of the edge of the surface area are determined based on the incomplete marker part captured taking into account the predefined shape and size of the marker. In a corresponding embodiment of the arrangement, the optical coordinate measuring device is designed to capture the incomplete marker part and the determining device is designed to determine coordinates of the edge of the surface area based on the incomplete marker part captured taking into account the predefined shape and size of the marker.

The missing marker part may be absent or may be present on an area of the coating that extends beyond the edge, for example on another, second surface area around the edge. The different surface areas may extend angled to each other with the angle being defined with respect to the edge.

From the incomplete marker part and by using the information about the predefined shape and size of the marker, the edge of the workpiece can be calculated. Preferably, the marker also comprises at least one defined point, such as a center point. The defined point may be located in the incomplete marker part or in the missing marker part. Not only if the defined point is located in the incomplete marker part, known information about the position of the defined point may be used as well for determining the coordinates of the edge of the workpiece. Otherwise or in addition, known information on the position with respect to other markers of the marker pattern can be used as well for determining the coordinates of the edge of the workpiece. This known information can be the pre-known information mentioned above, for example.

According to a further embodiment of determining the geometry of the surface edge of a workpiece, the information about the shape and size of the markers of the marker pattern is used to determine cut points of the respective marker outline at the workpiece edge with a projection of the workpiece edge into or onto the coating. The projection results in an edge of the coating that corresponds to the edge of the workpiece. The outline of every incomplete marker at the edge has two cut points with the edge. The three-dimensional coordinates of the cut points can be determined by using the knowledge about the size and shape of the markers and preferably by also using any further knowledge about the markers and/or the marker pattern.

Since the marker pattern is attached (e.g. printed) to the coating and/or is part of the coating, the determined points of the marker pattern are not part of the workpiece surface and this leads to a deviation between the absolute positions of the determined points and the workpiece surface. However, this deviation is acceptable for many applications, since the coating thickness is typically small (e.g. from 1 $\mu$m, preferably from 2 $\mu$m, to e.g. 0.2 mm, preferably to 0.5 mm) compared to the dimensions of the workpiece and since the different points of the marker pattern typically have the same distance to the workpiece surface.

The present invention is particularly useful for determining the geometry of workpieces with a curved surface, since the three-dimensional geometry is determined. However, it can also be applied to workpieces with planar surfaces, for example in order to determine deviations from the planarity.

The determined coordinates of the marker pattern points can be used, for example, for assessing deviations between the actual geometry of the workpiece and a specified geometry, such as a geometry specified by CAD (computer aided design) data of the workpiece. In addition or alternatively, the determined coordinates can be used as input to model the workpiece surface geometry. For example, interpolation techniques can be performed to increase the spatial resolution compared to only using the determined points. Interpolation may include using splines or other mathematical functions to describe the course of the workpiece surface or of the coating comprising the marker pattern.

In the process of mounting the workpiece to at least one other workpiece, preferably the following procedure is performed: The coating is applied to the workpiece surface first. Then, the three-dimensional coordinates of a plurality of points of the marker pattern are determined. Taking into account information comprising the determined coordinates and/or any result of further processing the determined coordinates, it is assessed if the geometry of the workpiece surface matches specifications. These specifications may include maximum tolerances of deviations from a specified geometry of the workpiece surface. If the assessment has the result that the specifications are met, the workpiece is mounted to the at least one other workpiece. Otherwise, the workpiece is rejected and not mounted. Alternatively, a rejected workpiece can be machined and/or manually treated to meet the specifications and the workpiece can then be mounted. When machining and/or manually treating the rejected workpiece, information comprising the determined coordinates and/or any result of further processing the determined coordinates can be taken into account.

Determining the position of markers of a marker pattern is known for many types of marker patterns. For example, the marker pattern may be a regular grid of lines or fields if the marker pattern extends in a single plane. Distortions of the regularity occur if the marker pattern that is carried by coating material is applied to a bent workpiece surface. These distortions comprise the information on the deviations of the workpiece surface from a plane surface or from a surface of defined shape.

A different example is described with reference to US 9,934,592 B1. The content of the document is herewith included by reference. This document discloses a method and a system for determining a 6-DOF (degrees of freedom) pose of an object in space using an optical-tracking marker attached to the object. The marker pattern of the present invention may comprise a plurality of the markers described by the document. By determining the 6-DOF pose of each of the markers of the marker pattern captured by the optical coordinate measuring device, at the least the three-dimensional coordinates of each marker (in particular of a single, unique point of each marker) are determined. The additional information of the 6-DOF pose can be neglected or can be used in addition in order to define a three dimensional model of the workpiece surface. Alternatively, only part of the procedure described in the document can be performed so that the three-dimensional coordinates of the single, unique point of each marker are determined. Fig. 3 of US 9,934,592 B1 illustrates a procedure comprising the steps

- attached marker to object
- capture image (of the object with the marker)
- determine 6-DOF pose of marker and
- determine 6-DOF pose of object

This procedure can be modified to include the steps

- attached a marker pattern comprising a plurality of the markers to object
- capture image (of the object with the marker pattern)
- determine 6-DOF pose of each marker and
- determine 3-DOF geometry of object surface

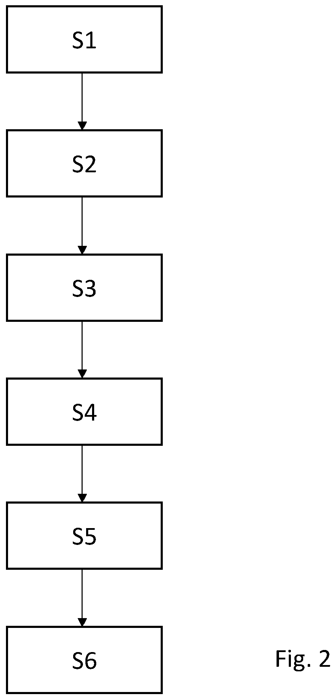

Exemplary embodiments of two-dimensional optical-tracking markers that can be used as in each case one of the plurality of markers of the marker pattern of the present invention, are described in US 9,934,592 B1 with reference to Fig. 2 of the document. These markers comprise an inner marker area and an outer background area, although the outer background area can be omitted. While inner marker area has a circular contour, the outer background area might have a different form. In the embodiments shown in Fig. 2 of the document, circular contour has a defined and known radius R. The circular contour defines a circle centre point. The marker area may comprise a marker structure (called "pattern 42" by the document) with an intensity profile that varies substantially continuously along a circular path around circle centre point. Accordingly, the marker structure may be perceived as analog or almost analog, although the marker structure may be produced from a plurality of dots or pixels. In intensity profile may be constant along any radial path starting at the circle centre point and extending radially outward.

Different intensity profiles for different markers may be used as individual codes that allow to distinguish the individual markers one from the other in an image analysis process. More optional details are described in US 9,934,592 B1.

From the captured image of the marker pattern, an elliptical representation of the circular contour can be detected for each marker. If a camera has captured a marker in a viewing direction perpendicular to the surface of the workpiece and therefore of the coating, the circular contour does not appear elliptical, but circular. In all other viewing directions the circular contour appears elliptical. The elliptical representation or, in short "ellipse", can be characterized by ellipse parameters, namely a semi-major axis, a semi-minor axis, an ellipse centre point defined by two coordinates in a two-dimensional image-coordinate system and by an ellipse orientation, which can advantageously be defined as an angle between a first axis co-linear with the semi-major axis and a second axis of the image coordinate system. Semi-major axis, semi-minor axis, the two-dimensional coordinates of the ellipse centre point and ellipse orientation define a first, second, third, fourth and fifth parameter characterizing the elliptical representation of the circular marker in the camera image.

First image values from the elliptical representation of the inner marker area of the respective marker in the camera image are sampled. Then, a gradient vector is determined for each sampled first image value. The gradient vector represents a direction of maximum change in the intensity profile at the respective image value. In the exemplary embodiments described by US 9,934,592 B1, the intensity profile of inner marker area does not vary along any radial path starting at the circle centre point and extending radially outward. Therefore, the gradient vector points in a direction that is orthogonal to a radial line. Accordingly, orthogonal straight lines may be determined for each of the sampled first image values, with each orthogonal straight line extending in a radial direction and being orthogonal with respect to one gradient vector. The plurality of orthogonal lines defines a point of intersection, which may be used as a relevant ellipse centre point. In practice, it might happen that the plurality of orthogonal lines do not converge at one point of intersection. Therefore, the relevant ellipse centre point may be determined as a point that minimizes the sum of distances to each of orthogonal lines. An ellipse centre point may be determined using conventional image processing techniques. For example, the ellipse centre point may be determined as point of intersection between the semi-major axis and the semi-minor axis, with these two ellipse axes being detected using image analysis techniques.

The first image values may be selected with a sufficient distance from an expected point of intersection within the inner marker area. The image values might be selected in various ways. For example, the image values may be selected such that they surround the expected point of intersection in a substantially uniform manner. Additionally or alternatively, first image values might be selected randomly and/or sample image values might be selectively placed in areas where the intensity profile changes particularly strong.

Still with reference to specific embodiments described in US 9,934,592 B1, orthogonal lines may be weighted. For example, if a gradient vector corresponding to a respective line is rather weak (which means that the intensity profile does not change strongly at the selected image value relative to adjacent image values), the respective line might be treated with a smaller weight compared to other orthogonal lines associated with stronger gradient vectors.

In a further step (see FIG. 5 of US 9,934,592 B1), a polar coordinate image may be determined by means of a coordinate transformation from Cartesian coordinates to polar coordinates applied to the marker image. The relevant ellipse center point or the true ellipse center point may be used as polar coordinate origin. In a further step, a low pass filter is applied to the polar coordinate image for removing high frequency noise. As a result, a de-noised image is obtained in the same polar coordinate system. In a further step, the filtered polar coordinate image is re-transferred into Cartesian coordinates and a corresponding de-noised Cartesian image is obtained.

A maximum radial distance from the ellipse center point, or alternatively, from the point of intersection may be defined in order to select an image area for further image analysis. The radial distance may be taken as a maximum coordinate value in the polar coordinate system. Following that, a desired resolution for the polar coordinate image may be defined and a number $N_r$ of sample values along the r-axis (the axis in the direction of the radius r) and a number $N_\theta$ of sample values along the $\theta$-axis (the axis of the polar coordinate $\theta$) is selected. With the point of intersection (or the ellipse center point) being defined as the origin of the polar coordinate system, the coordinate transformation from Cartesian coordinates to polar coordinates is carried out in accordance with:

$$x\,(r,\theta) = x0 + r\cos\theta$$

$$y\,(r,\theta) = y0 + r\sin\theta,$$

with x0, y0 being the Cartesian coordinates of the ellipse center point and with

$$r = rmax * nr / Nr$$

$$\theta = 2\pi * n\theta / N\theta,$$

where the natural numbers nr = 0, 1, 2, ... Nr-1 and n$\theta$ =0, 1, 2, ... N$\theta$-1, and with rmax being the maximum value of r.

The image intensity values from the original Cartesian image can be interpolated in order to achieve the respective image values of the polar coordinate image, for example by using a bilinear interpolation algorithm. Following that, low pass filtering step may be carried out. Any suitable standard digital filter algorithm might be used here. Thereafter, the de-noised polar coordinate image is re-transformed into Cartesian coordinates, wherein individual image values of the de-noised Cartesian image are again determined by interpolation from respective image values of the image. The original image might be oversampled before the polar coordinate transformation.

In a further step, the second image values may then be sampled from de-noised image. The second image values may be sampled along an elliptical path around the point of intersection and/or along an elliptical path around the ellipse center point in order to determine a transfer function relating the marker pattern to the respective image pattern in the elliptical representation (cf. FIG. 6 of US 9,934,592 B1).

By comparing the sampled image pattern and the known marker pattern, it is possible to determine a transfer function that relates those two patterns. FIG. 7. FIG. 7a of US 9,934,592 B1 show an intensity profile along a circular path around the circle center point. FIG. 7b of US 9,934,592 B1 shows the intensity profile along a respective path around the ellipse center point or, alternatively, around the relevant point of intersection. The two intensity profiles are similar to each other, but not identical. In fact, one intensity profile is a distorted version of the other intensity profile due to the perspective projection. The intensity profiles f1, f2, which are functions of the phase angle $\varphi$, are generally related in mathematical terms as

$$f2(\varphi) = f1(\varphi + \Delta\varphi(\varphi)),$$

with $\Delta\varphi(\varphi)$ being a non-linear function representing the distortion. The function $\Delta\varphi(\varphi)$ may be approximated by a Fourier series

$$\Delta\varphi(\varphi) = a0 + a1 * \cos(\varphi) + a2 * \cos(2\varphi) + . . . + aN * \cos(N\varphi) +$$
$$b1 * \sin(\varphi) + b2 * \cos(2\varphi) + . . . + bN * \sin(N\varphi).$$

The Fourier series coefficients a0, a1, a2, ... aN and b1, b2, ... bN, can be determined by solving a set of non-linear equations

$$f2(\varphi m) - f1(\varphi m + \Delta\varphi(\varphi m)) = 0$$

for m = 1, 2, ..., N, with N being the number of sample values, wherein $\varphi m$ is therefore the phase angle of the respective sample value.

FIG. 7d of US 9,934,592 B1 illustrates the phase difference between the intensity profiles resulting from the perspective projection.

Therefore, a feature transfer function is determined according to a further step in order to establish the relationship between the marker pattern and the image pattern. The feature transfer function may be used for determining a particular correspondence between a selected marker feature and its image representation. For example, FIG. 6 of US 9,934,592 B1 shows a marker pattern with a characteristic feature in the form of phase $\varphi m0$ of the radial line having the highest intensity values in the marker pattern. The corresponding representation in the camera image may be advantageously used for determining the correspondence between the marker feature and its image representation.

According to a further step, further ellipse parameters, such as the semi-major axis, the semi-minor axis and the ellipse orientation may be determined. Following that, the 6-DOF-pose of the marker in space is determined, as follows: As is known to those skilled in the art, a circular contour can be described in a parametrical form as

$$xm(\varphi m) = R * \cos(\varphi m),$$

with φm being a variable parameter and R being the known radius. Following that, a selected marker point on the circular contour can be expressed as

$$xm = R * \cos(\varphi n),$$

$$ym = R * \sin(\varphi n).$$

Likewise, the elliptical representation can be described in parametrical form as follows:

$$x1(\varphi e) = Rx * \cos(\varphi e),$$

$$y1(\varphi e) = Ry * \sin(\varphi e),$$

$$xe(\varphi e) = x1(\varphi e) * \cos(\theta) + y1(\varphi e) * \sin(\theta) + x0,$$

$$ye(\varphi e) = -x1(\varphi e) * \sin(\theta) + y1(\varphi e) * \cos(\theta) + y0,$$

with φe being a variable parameter and Rx, Ry, x0, y0 and θ being ellipse parameters that can be derived from the camera image as described above. In particular, Rx is the semi-major axis of the ellipse, Ry is the semi-minor axis of the ellipse, x0, y0 are the Cartesian coordinates of the ellipse center point, and θ is a polar coordinate of a parameter representing the ellipse orientation.

In addition to those five ellipse parameters, the correspondence between marker parameter φm0 and ellipse parameter φe0 is determined on the basis of the transfer function mentioned above. The 6-DOF-pose of the marker in space can then be determined from the six ellipse parameters Rx, Ry, x0, y0, θ, φe0.

Generally, the relationship between the 6-DOF-pose of the known marker and the ellipse parameters can be defined as the set of the six ellipse parameters Rx, Ry, x0, y0, θ, φe0 being a function of tx, ty, tz, α, β, γ, with tx, ty, tz being the coordinates of the marker center point in 3D space and α, β, γ being the rotation angles describing the marker orientation in space. For a particular marker having a particular marker image pattern, a correspondence between selected points xm, ym on the circular marker contour and respectively selected points xe, ye on the ellipse contour are a function of the marker 6-DOF pose, i. e. xe, ye are functions of tx, ty, tz, α, β, γ, xm, ym.

Using the ellipse parameters derived from the camera image, it is possible to set up a system of equations relating several points with in each case the coordinates xe, ye on the ellipse contour to respective points xm, ym on the circular marker contour. There are six unknown marker parameters and two equations for each correspondence. Therefore, by establishing correspondences between three or more points with the coordinates xe, ye on the ellipse contour and the respective three or more points xm, ym on the circular marker contour, one can determine the 6-DOF pose of the marker by solving the set of equations. In some preferred embodiments, the set of equations is solved by using a numerical approach, such as the Levenberg-Marquardt approach. As a result, the coordinates of the marker center point in space and the rotation angles of the marker in space, i.e. its 6-DOF-pose in space, are obtained from the ellipse parameters derived from the camera image and the known marker parameters. Based on the knowledge of the 6-DOF-pose of the marker, the 6-DOF-pose of the object is then determined in a further step.

Examples of the present invention will be described with reference to the attached drawing. The individual figures of the drawing show:

Fig. 1    an arrangement for determining a three-dimensional geometry of a surface area of a schematically shown workpiece with a coating,

Fig. 2    a flow-chart illustrating a method of determining a three-dimensional geometry of a workpiece,

Fig. 3    a plan view of a workpiece comprising a coating with a marker pattern, wherein several markers of the marker pattern are incomplete, because they extend along an edge of the workpiece surface, and

Fig. 4    schematically and enlarged a region of the plan view of Fig. 3 with one of the incomplete markers.

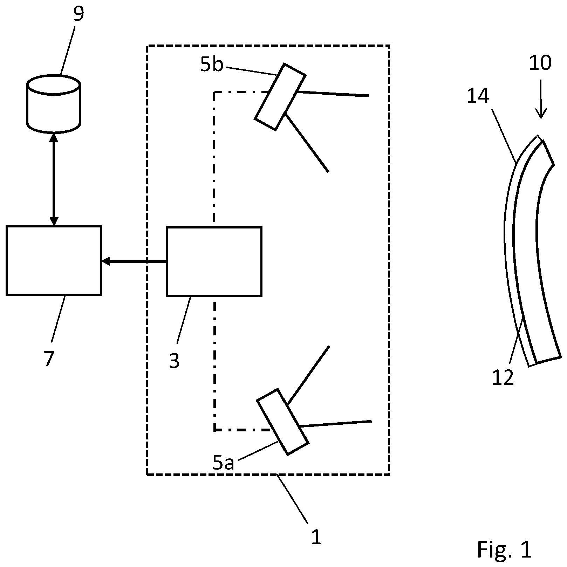

Fig. 1 shows an optical coordinate measuring device 1 having an image processing device 3 and two cameras 5a and 5b. The cameras 5a, 5b are in particular digital cameras that are capable of producing two-dimensional images. However, the optical coordinate measuring device according to the present invention may comprise only a single two-dimensional image camera or more than two cameras and/or at least one camera that produces one-dimensional images or three-dimensional images. In particular, the optical coordinate measuring device may comprise a hand-held optical scanner or may be a device comprising optical image capturing means (such as cameras or scanners) that are or can be fixed on a base or that are or can be attached to any other holder.

The cameras 5a, 5b are directed to a surface area 12 of a workpiece 10. The surface area 12 is coated by a coating 14 which comprises a marker pattern (not shown in Fig. 1). The image processing device 3 is adapted to combine the images produced by the cameras 5a, 5b so that three-dimensional image information is obtained. This image information is optionally further processed by the image processing device 3. A determining device 7 for determining a three-dimensional geometry of the workpiece 10 is connected to the image processing device 3. During operation of the arrangement shown in Fig. 1, the three-dimensional image information or optionally processed three-dimensional image information is transferred from the image processing device 3 to the determining device 7 which determines the three-dimensional geometry of the workpiece 10 from the transferred information. Optionally, this operation may be repeated, in particular based on different viewing angles of the cameras 5a, 5b onto the workpiece 10 or onto the same surface area 12 of the workpiece 10.

The determining device 7 may use existing information on the workpiece pattern, which existing information is stored in a data storage 9 that is connected to the determining device 7.

The arrangement shown in Fig. 1 or any other arrangement that comprises an optical coordinate measuring device can be operated, for example, as will be described with reference to Fig. 2. In the description of fig. 2, reference numerals of Fig. 1 are used, but this is not intended to limit the description to the use of the arrangement shown in Fig. 1.

In a first step S1, a marker pattern is applied to a coating 14, for example by printing the pattern onto the coating 14. In particular, the coating 14 may be part of a sheet-like material having a sufficiently large surface so that sections of the coating 14 may be applied to several surface areas of the workpiece or of several different workpieces. In the following step S2, the coating 14 with the marker pattern is applied to a surface area 12 of the workpiece 10. Alternatively, the marker pattern may be applied to the coating 14 when the coating 14 is already applied to the surface area 12.

In the following step S3, the workpiece 10 and the optical coordinate measuring device 1 are arranged, so that the optical coordinate measuring device 1 can capture the surface area 12 that is covered by the coating 14. In the specific embodiment described here, the two cameras 5a, 5b of the optical coordinate measuring device 1 both capture at least one two-dimensional image of the surface area 12 that is covered by the marker pattern carrying coating 14.

In the optionally following step S4, the captured image(s) of the surface area 12 are processed by the image data processing device 3 of the optical coordinate measuring device 1 so that three-dimensional image information about the surface area 12 is obtained.

In the following step S5, three-dimensional image information is transferred to the determining device 7 which determines coordinates of a plurality of points of the marker pattern carried by the coating 14 with respect to three dimensions. Optionally, the determining device 7 may use existing information on the marker pattern and/or on an intended shape of the surface area 12 in step S5. This information may be retrieved from the data storage 9. Furthermore, the determining device 7 outputs the determined coordinates and/or processed information based on the determined coordinates, such as a three-dimensional shape of the surface area 12 and/or a deviation to an intended shape of the surface area 12.

In the following optional step S6, the coating 14 may be removed from the surface area 12.

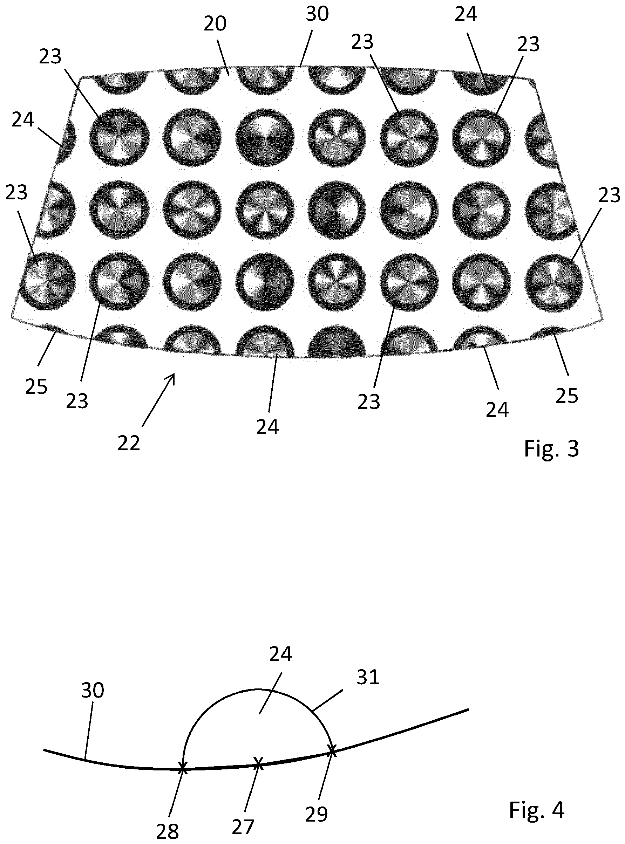

Fig. 3 shows a workpiece 20 with a coating carrying a marker pattern 22. The markers of the marker pattern 22 are all identical in shape and size, but preferably have different pattern structures which allows for unambiguously determining the individual markers from images captured. The markers are all circular and have a circular ring that encircles a central circular area. This type of markers is for example known from figures 2 and 6 of US 9,934,592 B1.

There are in total twenty complete markers 23 and eighteen incomplete markers 24 on the surface area of the workpiece 20 which is shown in Fig. 3. In addition, there are parts of circular ring areas 25 of additional markers, wherein no part of the central circular area of these additional markers is visible on the surface area of the workpiece and, therefore, these additional markers are not used for determining coordinates. The incomplete markers 24 are incomplete, since they extend along the edge 30 of the surface area. The missing part of the surface area would be visible on the other side of the edge line if the edge line would be a hypothetical line in a central region of the surface area. Since this is not the case, the missing part of the incomplete marker 24 appears to be cut-off from the visible part of the incomplete marker 24.

The only marker shown in Fig. 4 is one of the incomplete markers 24 of the plan view of Fig. 3. For simplicity, the circular ring area of the marker 24 is not show. In this specific case, the circle center 27 of the incomplete marker 24 is located on the surface area that is captured by the optical coordinate measuring device. This may be different for other incomplete markers 24. Their circle center may not be located on the surface area. In addition, Fig. 4 shows the two section points 28, 29 where the outline 30 of the central area of the marker cuts the outline 30.

There are different ways of determining the coordinates of the edge 30 by evaluating the image captured of the incomplete markers 24. With reference to the incomplete marker 24 shown in Fig. 4, the three-dimensional coordinates of the two section points 28, 29 can be determined, thereby determining coordinates of two points of the edge 30. In particular, as described above with reference to US 9,934,592 B1, the 6-DOF (six degrees of freedom) pose of the incomplete marker 24 can be determined. This includes at least the coordinates of the circle center 27, the orientation of the marker and the coordinates of a point of the outline 30. This is possible, although the outline 30 of the incomplete marker 24 is also incomplete, i.e. is only a part of a complete and ellipse, and is also possible in cases where the circle center is located outside of the captured surface area. However, the precision of the coordinate determination may decrease with increasing fraction of the missing area of the marker. Determination of the three-dimensional coordinates is possible even for a single two-dimensional image that has been captured, since the form of the ellipse comprises the information about the orientation of the surface area relative to the line of sight when capturing the image. In other words, the circular marker can appear as a circle only if the line of sight is perpendicular to the surface area. If there is a strong curvature of the surface area, markers having small outer dimensions are preferred so that the curvature over the region which is covered by the marker can be neglected or at least does not significantly influence the determination result.

Determination of the three-dimensional coordinates is also possible in case of two cameras that capture the surface area and thereby the incomplete markers at the edge under different viewing angles, i.e. the lines of sight intersect each other at an angle of less than 180 degrees or are skewed. For example, the edge section points (e.g. edge section points 28 and 29 of Fig. 4) can be determined directly from the captured images of the two cameras using triangulation.

In addition or alternatively, known information on the position of the circle center or of another defined point of the marker with respect to other markers of the marker pattern can be used as well for determining the coordinates of the edge of the workpiece. The other defined point of the marker may be a defined point on the outline.

In addition or alternatively, it can be determined which fraction of the outline is located in the captured area. Optionally also taking into account the known dimensions of the marker, the section points of the outline with the edge and/or their distance to each other can be determined.

Preferably, the three-dimensional coordinates of the section points of several incomplete markers with the edge are determined and the determination result is output as the desired geometry information.

List of reference numerals

| | |
|---|---|
| 1 | optical coordinate measuring device |
| 3 | image data processing device |
| 5a, 5b | camera |
| 7 | determining device |
| 9 | data storage |
| 10 | workpiece |
| 12 | surface area |
| 14 | coating |
| 20 | workpiece |
| 22 | marker pattern |
| 23 | complete marker |
| 24 | incomplete marker |
| 25 | circular ring area |
| 27 | circle center |
| 28, 29 | edge section point |
| 30 | edge |
| 31 | outline of marker central area |

**Claims**

1. A method of determining a three-dimensional geometry of a workpiece (10), which comprises a workpiece surface that is coated by a coating (14), comprising the steps:

   - capturing a marker pattern (22) of the coating (14) by an optical coordinate measuring device (1),

- determining coordinates of a plurality of points of the marker pattern (22) with respect to three dimensions, thereby determining the geometry of the workpiece (10).

2. The method of claim 1, wherein the method further comprises applying the marker pattern (22) to the coating (14).

3. The method of claim 1 or 2, wherein the method further comprises removing the coating (14) from the workpiece surface after the step of capturing the marker pattern (22).

4. The method of one of claims 1 to 3, wherein pre-known information about the marker pattern (22) is used in the step of determining the coordinates of the marker pattern (22).

5. The method of one of claims 1 to 4, wherein the coating (14) is a removable protective coating (14) for protecting the workpiece surface.

6. The method of one of claims 1 to 5, wherein the coating (14) is a plastic film.

7. The method of one of claims 1 to 6, wherein the marker pattern (22) comprises a plurality of markers (23, 24) of predefined shape and size, wherein at least one of the markers (24) extends along an edge of a surface area (12) of the workpiece surface on the coating (14), so that the at least one of the markers (24) is incomplete compared to the predefined shape on the coating (14) at the surface area (12), thereby comprising an incomplete marker part on the coating (14) at the surface area (12) and a missing marker part not on the coating (14) at the surface area (12), wherein the incomplete marker part is captured by the optical coordinate measuring device (1) and wherein coordinates of the edge of the surface area (12) are determined based on the incomplete marker part captured taking into account the predefined shape and size of the marker (24).

8. An arrangement for determining a three-dimensional geometry of a workpiece (10), the arrangement comprising an optical coordinate measuring device (1) and a determining device, wherein the optical coordinate measuring device (1) is designed to capture a marker pattern (22) of a coating (14) on a surface of the workpiece (10) and the determining device is designed to determine coordinates of a plurality of points of the marker pattern (22) with respect to three dimensions from capturing results of the optical coordinate measuring device (1), thereby determining the geometry of the workpiece (10).

9. The arrangement of claim 8, wherein the determining device is designed to use pre-known information about the marker pattern (22) when determining the coordinates of the marker pattern (22).

10. The arrangement of claim 8 or 9, wherein the marker pattern (22) comprises a plurality of markers (23, 24) of predefined shape and size, wherein at least one of the markers (24) extends along an edge of a surface area (12) of the workpiece surface on the coating (14), so that the at least one of the markers (24) is incomplete compared to the predefined shape on the coating (14) at the surface area (12), thereby comprising an incomplete marker part on the coating (14) at the surface area (12) and a missing marker part not on the coating (14) at the surface area (12), wherein the optical coordinate measuring device (1) is designed to capture the incomplete marker part and wherein the determining device is designed to determine coordinates of the edge of the surface area (12) based on the incomplete marker part captured taking into account the predefined shape and size of the marker (24).

Fig. 1

```
┌─────────────┐
│     S1      │
└─────────────┘
       │
       ▼
┌─────────────┐
│     S2      │
└─────────────┘
       │
       ▼
┌─────────────┐
│     S3      │
└─────────────┘
       │
       ▼
┌─────────────┐
│     S4      │
└─────────────┘
       │
       ▼
┌─────────────┐
│     S5      │
└─────────────┘
       │
       ▼
┌─────────────┐
│     S6      │
└─────────────┘
```

Fig. 2

23    24

20    30    23    23

24

23                                                                    23

25

23                              24                        23

22                                                        24        25

Fig. 3

24

31

30

28        27        29

Fig. 4

Europäisches
Patentamt

European
Patent Office

Office européen
des brevets

# EUROPEAN SEARCH REPORT

Application Number

EP 21 17 6958

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 97/14932 A1 (OPTRONIC CONSULT AB [SE]; AAHLEN HANS [SE]) 24 April 1997 (1997-04-24) * the whole document * | 1-5,7-10 | INV. G01B11/24 |
| X | US 2009/009774 A1 (HIMMI MIKKO [FI] ET AL) 8 January 2009 (2009-01-08) * abstract; figures 3,4 * * paragraph [0002] - paragraph [0004] * * paragraph [0023] - paragraph [0036] * | 1-10 | |
| X | DE 10 2012 107591 A1 (FRAUNHOFER GES FORSCHUNG [DE]) 20 February 2014 (2014-02-20) * abstract; figure 10 * * paragraphs [0001], [0061] - paragraph [0062] * | 1-10 | |
| X | US 2012/327124 A1 (HATCHER CLIFFORD [US] ET AL) 27 December 2012 (2012-12-27) * abstract; figure 6 * * paragraph [0033] - paragraph [0057] * | 1-6,8,9 | |
| A,D | US 9 934 592 B1 (BODJANSKI MARIUSZ [PL] ET AL) 3 April 2018 (2018-04-03) * the whole document * | 1-10 | TECHNICAL FIELDS SEARCHED (IPC) G01B |

The present search report has been drawn up for all claims

| Place of search | Date of completion of the search | Examiner |
|---|---|---|
| Munich | 5 November 2021 | Stanciu, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 098 971 A1**

**ANNEX TO THE EUROPEAN SEARCH REPORT
ON EUROPEAN PATENT APPLICATION NO.**

EP 21 17 6958

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2021

| Patent document cited in search report | | | Publication date | Patent family member(s) | | | Publication date |
|---|---|---|---|---|---|---|---|
| WO 9714932 | A1 | | 24-04-1997 | NONE | | | |
| US 2009009774 | A1 | | 08-01-2009 | EP | 1828714 | A1 | 05-09-2007 |
| | | | | FI | 20041545 | A | 31-05-2006 |
| | | | | US | 2009009774 | A1 | 08-01-2009 |
| | | | | WO | 2006058954 | A1 | 08-06-2006 |
| DE 102012107591 | A1 | | 20-02-2014 | NONE | | | |
| US 2012327124 | A1 | | 27-12-2012 | CA | 2839495 | A1 | 27-12-2012 |
| | | | | CN | 103797485 | A | 14-05-2014 |
| | | | | EP | 2724270 | A2 | 30-04-2014 |
| | | | | JP | 2014523578 | A | 11-09-2014 |
| | | | | KR | 20140027488 | A | 06-03-2014 |
| | | | | US | 2012327124 | A1 | 27-12-2012 |
| | | | | WO | 2012177456 | A2 | 27-12-2012 |
| US 9934592 | B1 | | 03-04-2018 | CN | 108074262 | A | 25-05-2018 |
| | | | | EP | 3321883 | A1 | 16-05-2018 |
| | | | | EP | 3594903 | A1 | 15-01-2020 |
| | | | | US | 9934592 | B1 | 03-04-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9934592 B1